(19) **Europäisches Patentamt**
**European Patent Office**
**Office européen des brevets**

(11) **EP 2 591 193 B1**

(12) **EUROPÄISCHE PATENTSCHRIFT**

(45) Veröffentlichungstag und Bekanntmachung des Hinweises auf die Patenterteilung:
**03.05.2017 Patentblatt 2017/18**

(21) Anmeldenummer: **11734037.2**

(22) Anmeldetag: **22.06.2011**

(51) Int Cl.:
***E05F 11/48*** *(2006.01)*

(86) Internationale Anmeldenummer:
**PCT/EP2011/060437**

(87) Internationale Veröffentlichungsnummer:
**WO 2012/004128 (12.01.2012 Gazette 2012/02)**

(54) **FÜHRUNGSSCHIENE FÜR EINEN FENSTERHEBER UND TÜRSYSTEM FÜR EINE FAHRZEUGTÜR**

GUIDE RAIL FOR A WINDOW LIFT AND DOOR SYSTEM FOR A VEHICLE DOOR

RAIL DE GUIDAGE POUR UN LÈVE-VITRE ET SYSTÈME DE PORTIÈRE POUR UNE PORTIÈRE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **06.07.2010 DE 102010031015**

(43) Veröffentlichungstag der Anmeldung:
**15.05.2013 Patentblatt 2013/20**

(73) Patentinhaber: **Brose Fahrzeugteile GmbH & Co. Kommanditgesellschaft, Bamberg**
**96052 Bamberg (DE)**

(72) Erfinder:
• **KRIESE, Olaf**
**96450 Coburg (DE)**
• **SCHLECHTRIEMEN, Martin**
**96173 Staffelbach (DE)**
• **FRIEDRICH, Volker**
**96269 Großheirath (DE)**

(74) Vertreter: **Maikowski & Ninnemann Patentanwälte Partnerschaft mbB**
**Postfach 15 09 20**
**10671 Berlin (DE)**

(56) Entgegenhaltungen:
**DE-A1- 19 942 643     DE-C1- 19 504 781**

**Beschreibung**

Die Erfindung betrifft eine Führungsschiene für einen Fensterheber nach Anspruch 1.

Türsysteme oder Türmodule verwenden einen Aggregateträger, an dem Funktionskomponenten, beispielsweise eine Fensterhebereinheit, ein Lautsprecher, ein Seitenairbag, eine Türschlossanordnung oder dergleichen angeordnet werden, oder eine Grundplatte für eine Fensterhebereinheit, um eine vormontierbare, vorprüfbare Einheit zu schaffen, die in einfacher Weise an einer Fahrzeugtür montiert werden kann. Als Bestandteile einer Fensterhebereinheit trägt die Grundplatte oder der Aggregateträger dabei mindestens eine Führungsschiene, an der ein mit einer Fensterscheibe verbundener Mitnehmer geführt wird.

Derartige Türsysteme oder Türmodule werden in unterschiedlichsten Ausgestaltungen bei unterschiedlichen Fahrzeugen und Fahrzeugtypen eines Fahrzeugherstellers eingesetzt, wobei jede Variante eines Fahrzeugtyps eine spezifische, individuelle Ausbildung des Türsystems oder Fensterhebers bedingt, weil die Fahrzeugtüren der unterschiedlichen Varianten und Fahrzeugtypen unterschiedlich ausgebildet sind und sich in ihrer konstruktiven Gestaltung und Bauform unterscheiden. Beispielsweise werden bei unterschiedlichen Fahrzeugtüren Fensterscheiben mit unterschiedlicher Kinematik, d.h. unterschiedlichen Krümmungsradien, unterschiedlichen Abzugswinkeln (die angeben, ob eine Fensterscheibe nahezu senkrecht oder schräg in eine Fahrzeugtür eingefahren wird) und unterschiedlichen Verstellwegen einschließlich Drehungen um einzelne oder mehrere Fahrzeugachsen (X-, Y- und Z-Achse) verwendet und machen eine spezifische Anpassung der Führungsschienen oder der an einem Aggregateträger ausgebildeten Führungsabschnitte erforderlich.

Aus der DE 199 42 643 A1 ist es bekannt, Führungsschienen oder in einen Aggregateträger oder eine Grundplatte (nachstehend "Träger" genannt) integrierte, als Führungsabschnitte ausgebildete Führungsschienen in Längsrichtung zu biegen und/oder um ihre Längsachse zu verdrillen, so dass sie nach dem Einbauen in eine Fahrzeugtür beispielsweise um die Fahrzeuglängsachse (X-Achse) gebogen und/oder um die Fahrzeughochachse (Z-Achse) verdrillt sind.

Die gebogenen und/oder verdrillten Führungsschienen mit einem Führungsprofil aus einer Basis und zwei senkrecht von der Basis abstehenden Profilschenkeln werden im allgemeinen rollprofiliert, stanzgeprägt oder im Spritzgussverfahren hergestellt, wobei zur Herstellung einer verdrillten Führungsschiene für einen der Verdrillung entsprechenden Abzug der Fensterscheibe im Spritzgussverfahren ein Spritzgusswerkzeug erforderlich ist, das eine geteilte Form, die zum Einspritzen von Kunststoff und Entnehmen der Führungsschiene geöffnet oder geschlossen wird (so genanntes "AUF-ZU-Werkzeug"), und mindestens einen senkrecht oder unter einem Winkel zur Öffnungs- und Schließrichtung der geteilten Form bewegten Schieber enthält, um die durch die Verdrillungen erforderlichen Hinterschneidungen zu realisieren. Der Einsatz von Schiebern macht ein Werkzeug aber aufwändig und damit teuer und verlängert den Herstellungsprozess wegen der erforderlichen Bewegung der Schieber vor dem Öffnen oder nach dem Schließen der Form.

Aufgabe der vorliegenden Erfindung ist es, ein Führungsprofil für eine verdrillte Führungsschiene zur Verfügung zu stellen, das eine einfache und kostengünstige Herstellung einer solchen Führungsschiene ermöglicht.

Diese Aufgabe wird durch eine Führungsschiene mit den Merkmalen des Anspruchs 1 gelöst. Die erfindungsgemäße Lösung ermöglicht eine einfache und kostengünstige Herstellung eines Führungsprofils für eine verdrillte Führungsschiene, so dass ein einfaches AUF-ZU-Werkzeug ohne Schieber zur Herstellung der Führungsschiene eingesetzt werden kann.

Dem entsprechend weist das verdrillte oder gebogene Führungsprofil einer Führungsschiene zur Führung eines mit der Fensterscheibe koppelbaren Verstellteils des Fensterhebers entlang einer durch die Führungsschiene vorgegebenen Verstellrichtung eine Basis und zwei Schenkel auf, die unter stumpfen Entformungswinkeln derart von den Enden der Basis abstehen, dass die Größe der Entformungswinkel proportional ist zu der durch die Kinematik des Abzugs der Fensterscheibe vorgegebenen Biegung oder Verdrillung der Führungsschiene über den Verstellweg (Hub) der Fensterscheibe.

Dadurch ist das Entformen einer verdrillten Führungsschiene ohne Einsatz eines Schiebers im Werkzeug möglich und damit eine einfache und kostengünstige Herstellung eines Führungsprofils für eine verdrillte Führungsschiene gewährleistet.

Der Profilwinkel $\gamma$, mit dem die Schenkel gegenüber der Basisnormalen von den Enden der Basis des Führungsprofils abstehen, wird vorzugsweise mit der Bedingung

$$\gamma \geq \alpha + \beta$$

bestimmt, wobei $\alpha$ und $\beta$ die Verdrillwinkel der Führungsschiene bezogen auf die beiden Enden der Führungsschiene sind.

Bei einem Türsystem für eine Fahrzeugtür mit einem Träger und mindestens zwei in den Träger integrierten Führungsschienen enthält der Träger wenigstens eine derartige, mindestens abschnittsweise verdrillte oder gebogene Führungsschiene.

Auch bei diesem Einsatz einer Führungsschiene ist die Größe der Entformungswinkel proportional zu der durch die Kinematik des Abzugs der Fensterscheibe vorgegebenen Biegung oder Verdrillung des Trägers oder der Führungsschiene oder Führungsschienen über deren Verstellweg.

Bei parallel zueinander ausgerichteten, in einen Träger integrierten Führungsschienen stehen die Schenkel mit einem Profilwinkel gegenüber der Basisnormalen von den Enden der Basis des Führungsprofils ab, der der Bedingung

$$\gamma \geq \alpha + \beta$$

genügt, wobei $\alpha$ und $\beta$ die Verdrillwinkel der Führungsschiene bezogen auf die beiden Enden der Führungsschiene sind.

Bei auf die Fensterscheibenfläche ausgerichteten, in eine Grundplatte integrierten Führungsschienen stehen die Schenkel mit einem Profilwinkel gegenüber der Basisnormalen von den Enden der Basis ab, der der Bedingung

$$\gamma \geq \alpha + \beta - \delta/2$$

genügt, wobei $\alpha$ und $\beta$ die Verdrillwinkel der Führungsschienen bezogen auf die beiden Enden der Führungsschiene sind und $\delta$ der Winkel zwischen den Basen der beiden Führungsschienen ist.

Werden in den Träger zusätzliche Vertiefungen zur Aufnahme von Bauteilen eines Fensterhebers - wie beispielsweise einer Seiltrommel - eingeformt, so ist deren Ausrichtung, d. h. deren Winkellage gegenüber der Werkzeugtrennebene bzw. der Ebene des Trägers zu berücksichtigen, da sich die von der Senkrechten abweichende Abzugs- oder Entformungsrichtung des Werkzeugs auch auf die Profilwinkel der Führungsschienen auswirkt, um ein einfaches, schieberfreies Auf-Zu-Werkzeug einsetzen zu können.

Dementsprechend sind bei einem Türsystem mit einer in den Träger eingeformten Vertiefung zur Aufnahme eines Bauteils des Fensterhebers, insbesondere zur Aufnahme einer Seiltrommel, wobei die Seitenwände der Vertiefung mit einem Neigungswinkel $\Omega$ zur Normalen der Werkzeugtrennebene eines Werkzeugs geneigt sind, und parallel zueinander angeordneten Führungsschienen die Führungsschenkel der Führungsschienen mit einem Profilwinkel $\gamma$ gegenüber der Basisnormalen N geneigt, der der Bedingung

$$\gamma \geq \alpha + \beta \pm \Omega$$

genügt, wobei $\alpha$ und $\beta$ die Verdrillwinkel der Führungsschienen bezogen auf die beiden Enden der Führungsschienen sind.

Bei einem Türsystem mit einer in den Träger eingeformten Vertiefung zur Aufnahme eines Bauteils des Fensterhebers, insbesondere zur Aufnahme einer Seiltrommel, wobei die Seitenwände der Vertiefung mit einem Neigungswinkel $\Omega$ zur Normalen der Werkzeugtrennebene eines Werkzeugs geneigt sind, und an der Scheibenfläche einer Fensterscheibe ausgerichteten Führungsschienen sind die Führungsschenkel der Führungsschienen mit einem Profilwinkel $\gamma$ gegenüber der Basisnormalen N zu neigen, der der Bedingung

$$\gamma \geq \alpha + \beta - \delta/2 \pm \Omega$$

genügt, wobei $\alpha$ und $\beta$ die Verdrillwinkel der Führungsschienen bezogen auf die beiden Enden der Führungsschienen sind und $\delta$ der Winkel zwischen den Basen der beiden Führungsschienen ist.

Durch die Berücksichtigung des Neigungswinkels $\Omega$ bei der Festlegung des Kriteriums für die Bestimmung des minimalen Profilwinkels $\gamma$, unter dem die Führungsschenkel gegenüber der Basisnormalen N geneigt werden müssen, um den Träger mit einem einfachen Auf-Zu-Werkzeug entformen zu können, kann somit die Entformung unter einer von der Senkrechten zur Werkzeugtrennebene abweichenden Abzugsrichtung erfolgen.

Unter Beibehaltung der Bedingung, ein einfaches Auf-Zu-Werkzeug bei der Herstellung eines Trägers mit integrierten Führungsschienen mit Biegungen und/oder Verdrillungen einzusetzen, können bei einem Doppelschienensystem die Profilwinkel der Führungsschenkel der rechten und linken Führungsschiene voneinander verschieden sein, d. h. mit unterschiedlichem Maß an die Neigung der Vertiefung zur Aufnahme eines Bauteils des Fensterhebers angepaßt werden.

In gleicher Weise können sowohl bei parallel zueinander angeordneten Führungsschienen als auch bei an der Scheibenfläche einer Fensterscheibe ausgerichteten Führungsschienen die Profilwinkel der Führungsschenkel und/oder der Schenkel der rechten und linken Führungsschiene voneinander verschieden sein.

Durch die Ausbildung unterschiedlicher Winkel an den Führungsschenkeln der rechten und linken Führungsschiene können gleichzeitig unterschiedliche Führungseigenschaften der Führungsschienen berücksichtigt werden, d. h. beispielsweise eine Verbesserung der Führungseigenschaften einer der beiden Führungsschienen in Fahrzeuglängsrichtung oder in Richtung der X-Achse, indem der entsprechende Profilwinkel minimal bemessen und insbesondere gleich Null gesetzt, d. h. parallel zur Neigung der Seitenwände der Vertiefung zur Normalen der Werkzeugtrennebene ausgerichtet wird.

Ein Verfahren zur Herstellung einer verdrillten Führungsschiene ist dadurch gekennzeichnet, dass eine dem Führungsprofil der Führungsschiene entsprechende, geteilte Form eines Spritzgießwerkzeugs zum Einspritzen von Kunststoff unter Druck geschlossen und zum Entformen der Führungsschiene geöffnet wird, ohne dass ein Schieber senkrecht oder unter einen Winkel zur Öffnung und Schließrichtung des Spritzgießwerkzeugs (AUF-ZU-Werkzeug) geführt wird.

Ein Verfahren zur Herstellung eines Trägers und zweier an dem Träger angeordneter Führungsschienen eines Fensterhebers ist dadurch gekennzeichnet, dass eine dem Träger und dem Führungsprofil der Führungsschienen entsprechende geteilte Form eines Spritzgießwerkzeugs zum Einspritzen von Kunststoff unter Druck geschlossen und zum Entformen des Trägers und der Führungsschienen geöffnet wird, ohne dass ein Schieber senkrecht oder unter einem Winkel zur Öffnungs-Schließrichtung des Spritzgießwerkzeugs (AUF-ZU-Werkzeug) geführt wird.

Die Erfindung soll nachfolgend anhand mehrerer in den Figuren der Zeichnung dargestellter Ausführungsbeispiele näher erläutert werden. Es zeigen:

Fig. 1        eine Ansicht einer Fahrzeugtür mit daran angeordnetem Träger eines Türsystems mit einem Fensterheber und zwei in den Träger integrierten Führungsschienen;

Fig. 2        eine isolierte Ansicht des Trägers mit zwei integrierten Führungsschienen gemäß Fig. 1 mit drei darin eingetragenen Schnittlinien;

Fig. 3        eine schematische Darstellung von zwei parallel zueinander angeordneten Führungsschienen und einer gewölbten Fensterscheibe;

Fig. 4a bis 4c        schematische Schnitte durch den Träger gemäß Fig. 2 entlang der Schnittlinien A-A, B-B und C-C bei parallel zueinander angeordneten Führungsschienen;

Fig.5        eine schematische Darstellung des für eine Herstellung mit einem schieberfreien Werkzeug erforderlichen Führungsprofils einer Führungsschiene bei parallel zueinander angeordneten Führungsschienen;

Fig. 6        eine schematische Darstellung von zwei an der Scheibenfläche einer gewölbten Fensterscheibe ausgerichteten Führungsschienen;

Fig. 7a bis 7c        schematische Schnitte durch den Träger gemäß Fig. 2 entlang der Schnittlinien A-A, B-B und C-C bei zwei an der Scheibenfläche einer gewölbten Fensterscheibe ausgerichteten Führungsschienen;

Fig. 8        eine schematische Darstellung des für eine Herstellung mit einem schieberfreien Werkzeug erforderlichen Führungsprofils einer Führungsschiene bei an der Scheibenfläche der Fensterscheibe ausgerichteten Führungsschienen;

Fig. 9        einen schematischen Schnitt durch den Träger gemäß Fig. 2 entlang der Schnittlinie B-B bei zwei an der Scheibenfläche einer gewölbten Fensterscheibe ausgerichteten Führungsschienen und einer im Träger vorgesehenen, gegenüber der Werkzeugtrennebene geneigten Vertiefung;

Fig. 10A und 10B        schematische Darstellungen des für eine Herstellung mit einem schieberfreien Werkzeug erforderlichen Führungsprofils von parallel zueinander angeordneten rechten und linken Führungsschienen bei einer in den Träger eingeformten Vertiefung gemäß Fig. 9.

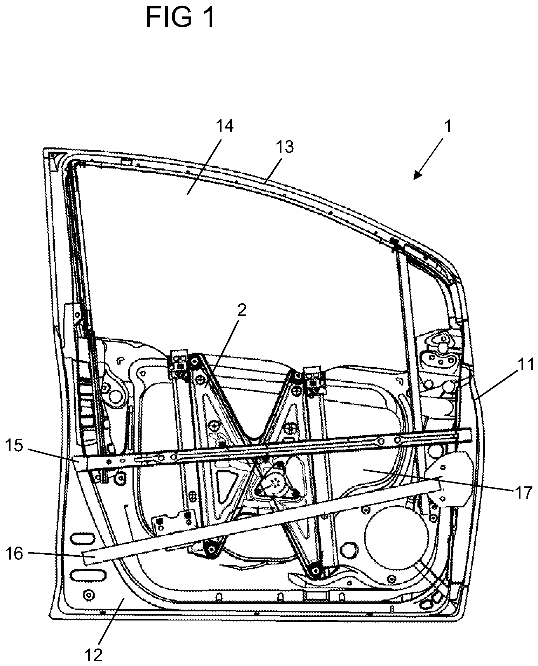

Fig. 1 zeigt eine Ansicht auf die dem Fahrzeuginnenraum zugewandte Innenseite einer Fahrzeugtür 1, die ein Türaußenblech 11 und ein Türinnenblech 12 sowie einen oberen Türrahmen 13 aufweist, der eine Fensteröffnung 14 umgibt. In dem aus dem Türaußenblech 11 und dem Türinnenblech 12 gebildeten Türkörper sind zwei Aufprallträger oder Crashbarrieren 15, 16 angeordnet, die bei einem Seitenaufprall auf die Fahrzeugtür 1 entstehende Crashkräfte auffangen und absorbieren.

An einer Öffnung 17 des Türinnenblechs 12 ist ein Träger 2 (Grundplatte oder Aggregateträger) zur Aufnahme von Funktionskomponenten der Fahrzeugtür 1 wie eines Fensterhebers, einer Türschlossanordnung, eines Seitenairbags oder dergleichen angeordnet und aus Metall oder Kunststoff gefertigt.

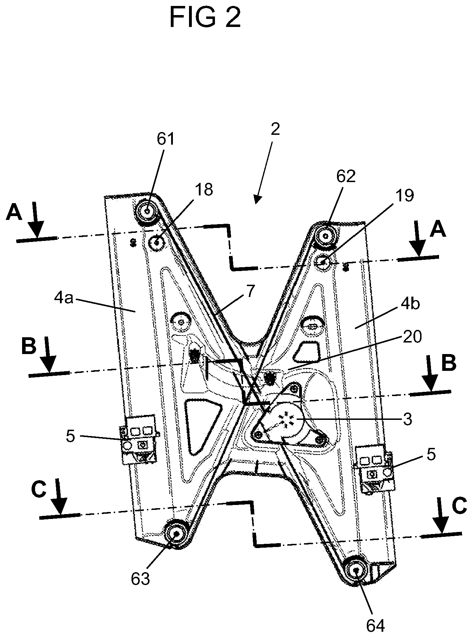

Fig. 2 zeigt in einer isolierten Ansicht den Träger 2 mit den darauf angeordneten Komponenten eines doppelsträngigen Fensterhebers, nämlich einer Antriebseinheit 3 mit einer Seiltrommel zum Antrieb eines Fensterheberseils 7, das über Seil- oder Umlenkrollen 61 bis 64 geführt und mit zwei auf Führungsschienen 4a, 4b angeordneten und geführten Mitnehmern 5 verbunden ist. Die mit einer Fensterscheibe gekoppelten Mitnehmer 5 werden je nach Antriebsrichtung der Antriebseinheit 3 auf den Führungsschienen 4a, 4b angehoben oder abgesenkt, wodurch die Fensterscheibe die Fensteröffnung 14 des Türrahmens 13 öffnet oder schließt.

Der Träger 2 wird über obere Befestigungsstellen 18, 19 und über die unteren Umlenkrollen 63, 64, die gleichzeitig Befestigungsstellen darstellen, mit dem Türinnenblech 12 gemäß Fig. 1 verbunden, indem Befestigungsbolzen durch die Befestigungsstellen 81, 82 bzw.

durch die Befestigungsstellen an den unteren Umlenkrollen 63, 64 gesteckt und mit dem Türinnenblech 12 in Eingriff gebracht werden.

Die Führungsschienen 4a, 4b zur Führung der Mitnehmer 5 sind in dem in Fig. 2 dargestellten Ausführungsbeispiel eines Trägers 2 einstückig an den Träger 2 angeformt, können aber auch alternativ gesondert hergestellt und in geeigneter Weise mit dem Träger 2 verbunden werden.

Abhängig von den Fahrzeugen unterschiedlicher Fahrzeughersteller, von den Fahrzeugtypen und der Ausbildung einer Fahrzeugtür kann die zu verstellende Fensterscheibe eines Fensterhebers unterschiedlich ausgebildet sein. So kann eine Fensterscheibe beispielsweise in Abhängigkeit von der Formgebung einer Fahrzeugtür einen bestimmten Krümmungsradius aufweisen, der bei unterschiedlichen Fahrzeugtüren unterschiedlich sein kann und eine Bewegungsbahn vorgibt, entlang der die Fensterscheibe zum Verstellen in den aus dem Türaußenblech 11 und Türinnenblech 12 gebildeten Türkörper eingefahren bzw. aus diesem herausgefahren wird. Darüber hinaus kann die Bewegungsbahn der Fensterscheiben unterschiedlich ausgebildet sein und beispielsweise nahezu senkrecht oder schräg in den Türkörper eingefahren bzw. aus diesem herausgefahren werden, oder zum Umfahren von Hindernissen im Türkörper bzw. zur bündigen Anlage einer gebogenen, tonnenförmigen Fensterscheibe an der Türdichtung, um die Fahrzeuglängsachse (X-Achse), Fahrzeugquerachse (Y-Achse) oder Fahrzeughochachse (Z-Achse) bzw. in durch die drei Achsen gebildeten Ebenen geschwenkt werden, so dass infolge dieser Vorgaben die die Bewegungsbahn der Fensterscheiben bestimmenden Führungsschienen in ihrer Längserstreckung entsprechend gebogen oder verdrillt sein müssen.

Dasselbe gilt für einstückig mit dem Träger verbundenen Führungsschienen, die zur Realisierung vorgegebener Bewegungsbahnen beim Verstellen einer Fensterscheibe Biegungen und/oder Verdrillungen aufweisen müssen.

Für die Herstellung von Führungsschienen oder Trägern für Türsysteme von Fahrzeugtüren werden wegen der hohen Maßhaltigkeit und einfachen Herstellung bei hohen Stückzahlen Spritzgusstechniken eingesetzt, bei denen Metall oder Kunststoff in flüssiger Form unter Druck in eine durch eine Werkzeugtrennebene geteilte Gussform, in deren geschlossener Stellung eingespritzt und das Werkstück in Form einer Führungsschiene oder eines Trägers der geöffneten Gussform entnommen wird. Dabei ist es aus Gründen kurzer Taktzeiten und Herstellung einfacher, kostengünstiger Werkzeuge erstrebenswert, nur eine Gussform zu verwenden, die zum Einspritzen des Werkstoffs geschlossen und zur Entnahme des Werkstücks geöffnet wird (so genanntes "AUF-ZU-Werkzeug"), ohne dass ein oder mehrere Schieber eingesetzt werden, die senkrecht oder unter einem Winkel zur Öffnungs- und Schließrichtung des Werkzeugs bzw. der Gussform bewegt werden, um Hinterschneidungen, Hohlräume oder dergleichen im Werkstück herzustellen, die bei Verdrillungen auftreten.

Die Entformung von verdrillten Führungsschienen oder verdrillten Führungsabschnitten an Trägern mit einem Profilwinkel von 90° ist wegen der dabei auftretenden Hinterschneidungen jedoch nur unter Einsatz von Schiebern im Werkzeug möglich. Um diesen notwendigen Einsatz von Schiebern im Werkzeug zu vermeiden, werden Führungsschienen vorgeschlagen, deren Führungsprofil erfindungsgemäß so ausgebildet ist, dass die Schenkel unter einem stumpfen Winkel von der Basis der Führungsschiene abstehen.

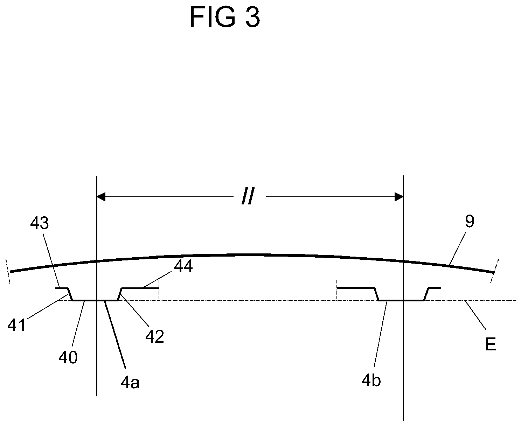

Das Maß der Neigung der Schenkel gegenüber der Basis der Führungsschiene, d.h. der Profilwinkel $\gamma$, hängt im Wesentlichen davon ab, ob es sich um eine einzelne Führungsschiene oder beim Einsatz von zwei Führungsschienen, ob diese parallel zueinander angeordnet oder an der Scheibenfläche der Fensterscheibe ausgerichtet sind. Die nachfolgend anhand der Fig. 3 bis 8 beschriebenen Ausführungsbeispiele beziehen sich auf die Bestimmung des Profilwinkels $\gamma$ bei parallel zueinander angeordneten bzw. auf die Scheibenoberfläche ausgerichteten Führungsschienen, wobei für eine einzelne Führungsschiene dieselben Bedingungen gelten wie für parallel zueinander angeordnete Führungsschienen.

Fig. 3 zeigt einen schematischen Querschnitt durch eine gebogene Fensterscheibe 9 und zwei parallel zueinander in einer Ebene angeordnete Führungsschienen 4a, 4b, die an den Seitenrändern eines Mittelkörpers 20 eines Trägers 2 gemäß Fig. 2 angeordnet sind. Die Führungsschienen 4a, 4b weisen eine Basis 40 auf, von deren Enden ein Führungsschenkel 41 und ein Schenkel 42 unter einem stumpfen Winkel gegenüber der Basis 40 abstehen. Von dem Ende des Führungsschenkels 41 steht ein Gleitsteg 43 und vom Ende des Schenkels 42 ein Steg 44 ab, die parallel zur Basis 40 ausgerichtet sind. Die Mitnehmer 5 gemäß Fig. 2 umgreifen den Führungsschenkel 41, den Gleitsteg 43 und die Basis 40, während der Schenkel 42 und der Steg 44 frei sind.

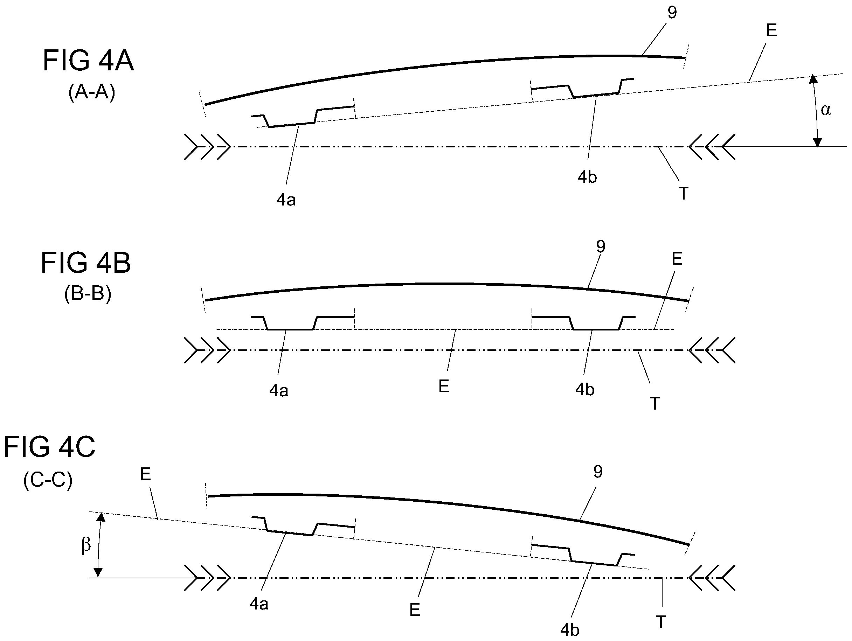

Zur Verdeutlichung der Verdrillung der in einer Ebene E angeordneten Führungsschienen 4a, 4b sind in den Fig. 4a bis 4c Schnitte durch den Träger 2 gemäß Fig. 2 entlang der Schnittlinien A-A, B-B und C-C dargestellt, die zum einen zeigen, dass die Führungsschienen 4a, 4b in einer Ebene E angeordnet sind, über ihre Längserstreckung (und im in die Fahrzeugtür eingebauten Zustand um die Fahrzeughochachse oder Z-Achse) aber verdrillt sind. Zum Charakterisieren des Verdrillungsgrades ist in den Fig. 4a bis 4c eine Werkzeugtrennebene T dargestellt, die der Teilung oder Werkzeugtrennebene einer geteilten Gussform als Werkzeug entspricht.

Gemäß Fig. 4a schließt die gemeinsame Ebene E der parallel zueinander angeordneten Führungsschienen 4a, 4b einen Verdrillungswinkel $\alpha$ mit der Werkzeugtrennebene T ein, während gemäß Fig. 4b die gemeinsame Ebene E der parallel zueinander angeordneten Führungsschienen 4 parallel zur Werkzeugtrennebene T verläuft. Gemäß Figur 4c schließt die gemeinsame Ebene E der parallel zueinander angeordneten Führungsschienen 4a, 4b einen Verdrillungswinkel β mit der Werkzeugtrennebene T ein.

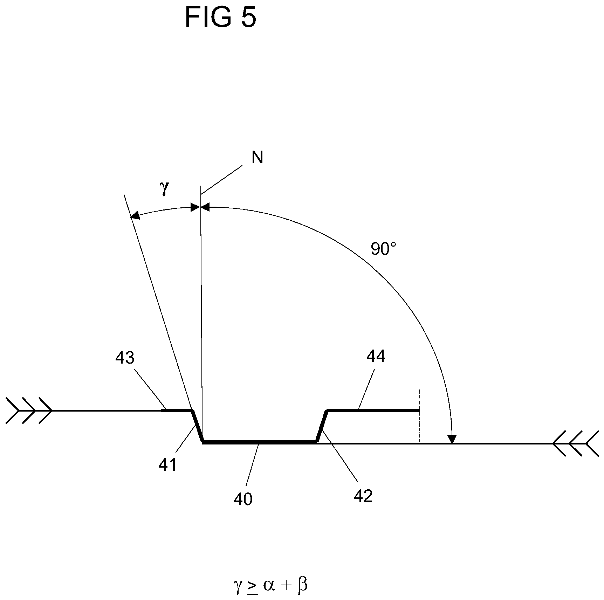

Die schematische Darstellung der Fig. 5 zeigt die Bedingung für den Einsatz eines schieberfreien Werkzeugs zur Herstellung einer verdrillten Führungsschiene bzw. zueinander parallel angeordneter, verdrillter Führungsschienen. Demzufolge muss der von dem einen Ende der Basis 40 abstehende Führungsschenkel 41 und - bei symmetrischer Ausgestaltung - der vom anderen Ende der Basis 40 abstehende Schenkel 42 gegenüber der Vertikalen oder Normalen N der Basis 40 - wie beim Führungsprofil konventioneller Führungsschienen vorgesehen - zusätzlich um einen Profilwinkel γ gegenüber der Vertikalen oder Normalen N geneigt sein, wobei der Profilwinkel γ der Schenkel 41, 42 größer oder gleich der Summe der Verdrillwinkel α, β sein muss:

$$\gamma \geq \alpha + \beta$$

Die vorstehende Bedingung gilt unabhängig davon, ob der Führungsschenkel 41 und der Schenkel 42 unter demselben Profilwinkel γ gegenüber der Vertikalen oder Normalen N der Basis 40 oder unter unterschiedlichen Profilwinkeln γ geneigt sind, das heißt auch bei unterschiedlicher Neigung des Führungsschenkels 41 und des Schenkels 42 muss die vorstehende Bedingung erfüllt sein, um ein schieberfreies Werkzeug einsetzen zu können und damit eine kostengünstige Herstellung von Führungsschienen bei kurzen Taktzeiten zu gewährleisten. Unter Beachtung der vorstehenden Festlegung des minimalen Profilwinkels γ kann der Schenkel 42 aber beliebig geneigt werden, da er nicht vom Mitnehmer umfasst wird.

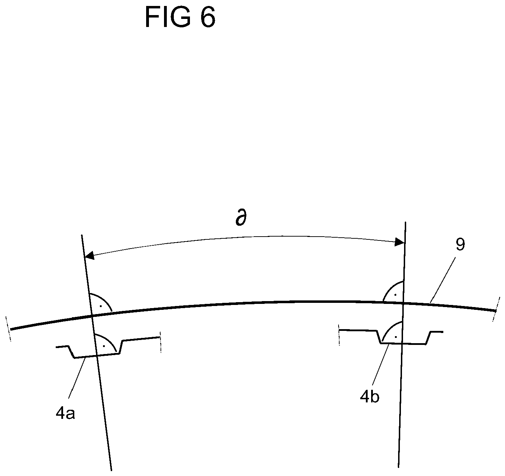

Fig. 6 zeigt in einem schematischen Querschnitt die Anordnung von an der Scheibenfläche einer Fensterscheibe 9 ausgerichteten Führungsschienen 4a, 4b, deren Basisnormale - gekennzeichnet durch einen rechten Winkel zwischen der Basisnormalen und der Basis sowie der Scheibenoberfläche - einen Neigungswinkel δ zwischen sich einschließen, der der Wölbung der Fensterscheibe 9 entspricht.

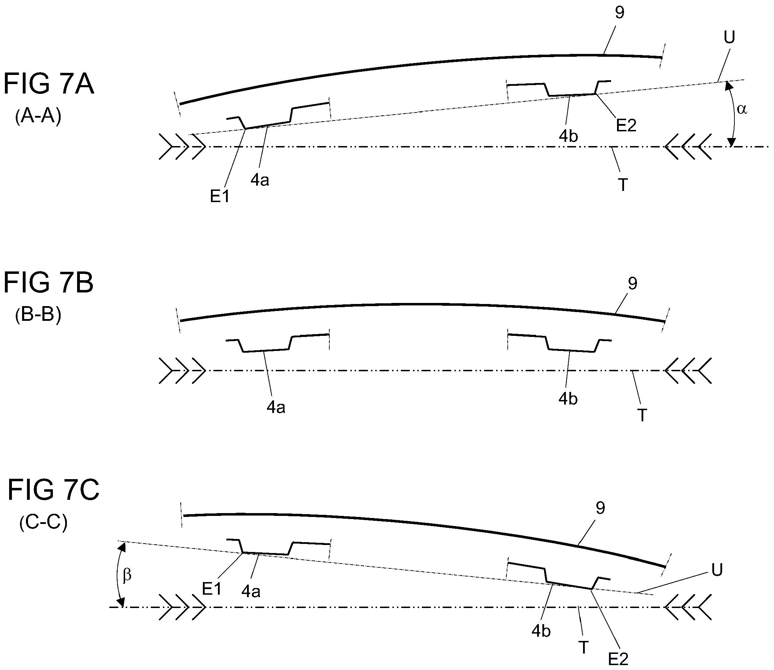

In den Fig. 7a bis 7c sind zur Verdeutlichung der Verdrillung der an der Scheibenfläche einer Fensterscheibe 9 ausgerichteten, einen Neigungswinkel δ zwischen sich einschließenden Führungsschienen 4a, 4b Schnitte durch den Träger 2 gemäß Fig. 2 entlang der Schnittlinien A-A, B-B und C-C dargestellt. Sie zeigen wie sich die Ausrichtung der über ihre Längserstreckung (und im in die Fahrzeugtür eingebauten Zustand um die Fahrzeughochachse oder Z-Achse) verdrillten Führungsschienen 4a, 4b zur Werkzeugtrennebene T verändert.

Das Maß der Verdrillung über die Länge der Führungsschienen 4a, 4b wird durch Verdrillungswinkel α und β zwischen der Werkzeugtrennebene T und einer Hilfslinie U, die durch den Schnittpunkt E1 des Führungsschenkels 41 mit der Basis 40 der linken Führungsschienen 4a und den Schnittpunkt E2 des Führungsschenkels 41 mit der Basis 40 der rechten Führungsschiene 4b gelegt ist, an den beiden Enden der Führungsschienen 4a, 4b gekennzeichnet.

Gemäß Fig. 7a schließen die Führungsschienen 4a, 4b einen Verdrillungswinkel α mit der Werkzeugtrennebene T ein, während gemäß Fig. 4b beide Führungsschienen 4 unter demselben Winkel zur Werkzeugtrennebene T verlaufen. Gemäß Fig. 7c schließen die Führungsschienen 4a, 4b einen Verdrillungswinkel β mit der Werkzeugtrennebene T ein.

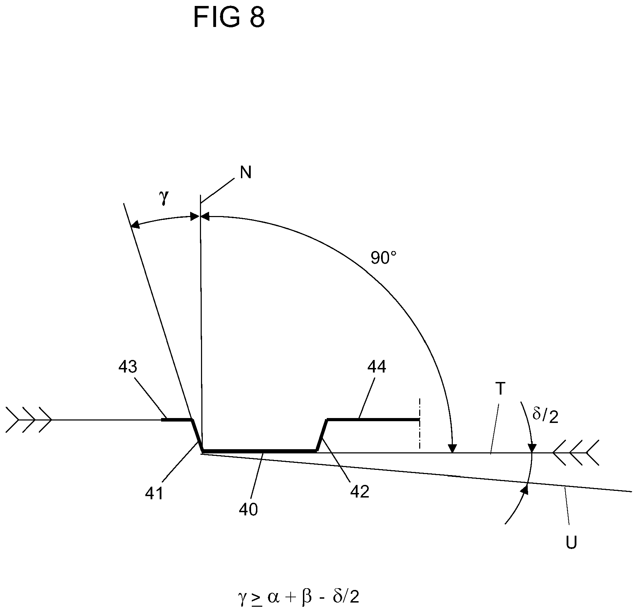

Fig. 8 zeigt in schematischer grafischer Darstellung die Bedingung für den Einsatz eines schieberfreien Werkzeugs zur Herstellung von an der Scheibenfläche einer Fensterscheibe 9 ausgerichteten, verdrillten Führungsschienen 4a, 4b. Danach muss der von dem einen Ende der Basis 40 abstehende Führungsschenkel 41 und - bei symmetrischer Ausgestaltung - der vom anderen Ende der Basis 40 abstehende Schenkel 42 gegenüber der Vertikalen oder Normalen N der Basis 40, d.h. gegenüber konventionellen Führungsschienen, zusätzlich um einen Profilwinkel γ gegenüber der Vertikalen oder Normalen N geneigt sein, der gleich oder größer der Summe der Verdrillwinkel α, β abzüglich des halben Neigungswinkels δ zwischen der Werkzeugtrennebene T und der Hilfslinie U sein muss

$$\gamma \geq \alpha + \beta - \delta/2$$

Auch bei an der Scheibenfläche ausgerichteten Führungsschienen 4a, 4b gilt die vorstehende Bedingung unabhängig davon, ob der Führungsschenkel 41 und der Schenkel 42 unter demselben Profilwinkel γ zur Vertikalen oder Normalen N der Basis 40 oder unter unterschiedlichen Profilwinkeln γ gegenüber der Normalen oder Senkrechten N der Basis 40 geneigt sind.

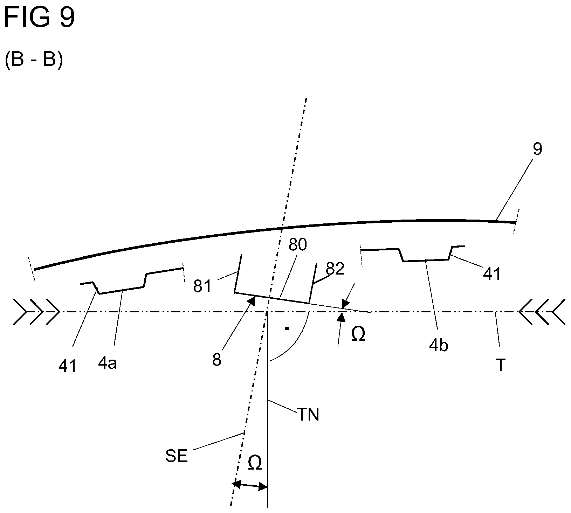

Fig. 9 zeigt einen Schnitt durch den Träger 2 gemäß Fig. 2 entlang der Schnittlinie B-B mit an der Scheibenfläche einer Fensterscheibe 9 ausgerichteten Führungsschienen 4a, 4b und einer in den Träger 2 eingeformten Vertiefung 8 mit zueinander parallelen Seitenwänden 81, 82, die unter einem Neigungswinkel Ω zur Normalen $T_N$ der Werkzeugtrennebene T geneigt sind. Für eine derartige Vertiefung 8 kann gefordert sein, dass die Seitenwände 81, 82 der Vertiefung senkrecht zur Basis 80 der Vertiefung 8 ausgerichtet sind, wie dies beispielsweise bei der Ausbildung eines Seiltrommelgehäuses zur Aufnahme einer Seiltrommel eines Seilfensterhebers gefordert wird.

Um auch bei einer solchen Anordnung mit einer Abzugsrichtung abweichend von der Senkrechten ein schieberfreies Auf-Zu-Werkzeug einsetzen zu können, müssen die Profilwinkel γ der Führungsschenkel 41 der linken und rechten Führungsschiene 4a, 4b an den Neigungswinkel Ω angepasst werden, um bei einer Entformung des Trägers in Richtung der strichpunktiert dargestellten Ebene SE der parallelen Seitenwände 81, 82 der Vertiefung 8 eine Ausbildung des Führungsschenkels 41 und des Schenkels 42 der linken und rechten Führungsschiene 4a, 4b ohne den Einsatz von Schiebern zu realisieren. Wegen der von der Senkrechten abweichenden Entformungsrichtung muss der bzw. müssen die Profilwinkel γ unter Berücksichtigung des Neigungswinkels Ω bestimmt werden, wobei der minimale Profilwinkel γ bei der Festlegung der Neigung des Führungsschenkels 41 zu beachten ist, während für den gegenüberliegenden, nicht vom Mitnehmer umfasste Schenkel 42 beliebig an alle Bedingungen unter Beachtung der Entformbarkeit ohne Schieber angepasst werden kann, in der Praxis aber in aller Regel unter demselben Winkel γ gegenüber der Basis 40 geneigt ist.

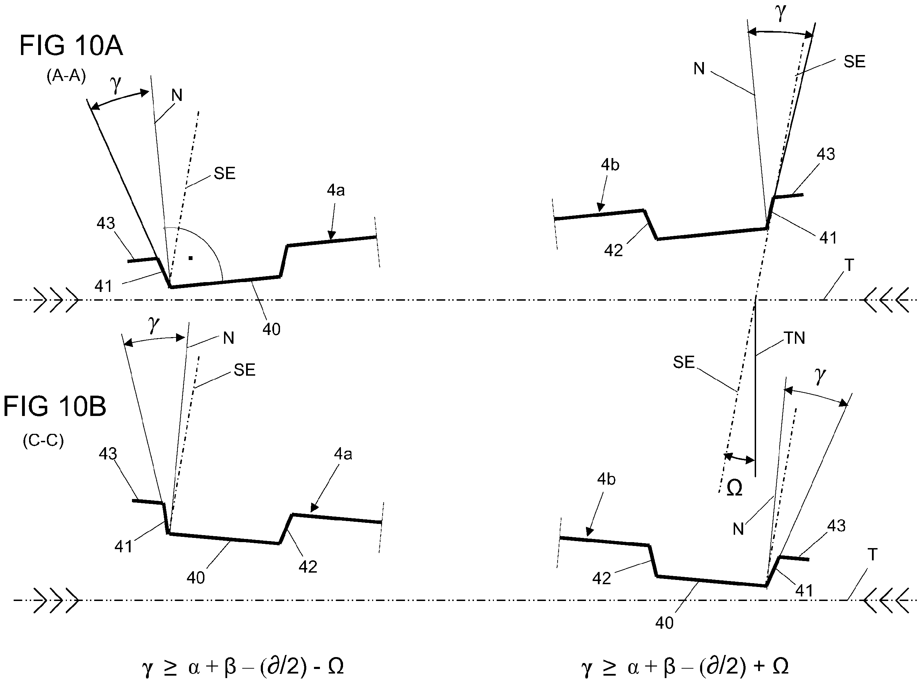

Die Auswirkung des Neigungswinkels Ω der Vertiefung 8 gegenüber der Normalen $T_N$ der Werkzeugtrennebene T ist in den Fig. 10A und 10B grafisch dargestellt, die einen Querschnitt durch den Träger gemäß Fig. 2 entlang der Schnittlinien A-A und C-C, d.h. an den Endpunkten der Führungsschienen mit einer Neigung nach links in Fig. 10A und einer Neigung nach rechts in Fig. 10B bei parallel zueinander angeordneten Führungsschienen 4a und 4b zeigen. Die folgende Beschreibung gilt analog auch für an der Scheibenfläche einer Fensterscheibe 9 ausgerichteten Führungsschienen 4a, 4b entsprechend der Darstellung gemäß Fig. 9.

Der minimale Profilwinkel γ, unter dem der Führungsschenkel 41 von der Normalen N der Basis 40 abweichen muss, um eine Entformung in Richtung der strichpunktiert dargestellten Ebene SE der parallelen Seitenwände 81, 82 der Vertiefung 8 zu gewährleisten wird in Abhängigkeit von der Neigung der Führungsschiene 4a bzw. 4b aus der Bestimmung

$$\gamma \geq \alpha + \beta - \delta/2 \pm \Omega$$

abgeleitet, d.h. der Profilwinkel γ muss bei an der Scheibenfläche einer Fensterscheibe 9 ausgerichteten Führungsschienen 4a, 4b gegenüber der Vertikalen oder Normalen N der Basis 40 um einen Winkel geneigt sein, der gleich oder größer der Summe der Verdrillwinkel α, β abzüglich des halben Neigungswinkels δ zwischen der Werkzeugtrennebene T und der Hilfslinie U gemäß den Fig. 7A und 7C zuzüglich bzw. abzüglich des Neigungswinkels Ω ist.

Bei parallel zueinander angeordneten Führungsschienen 4a, 4b gilt wegen des Wegfalls des Neigungswinkels δ zwischen der Werkzeugtrennebene T und der Hilfslinie U das Kriterium

$$\gamma \geq \alpha + \beta \pm \Omega$$

für den Profilwinkel γ.

Dabei geben beide vorstehende Formeln ein Kriterium, d.h. den Spielraum, bei der Bestimmung des Profilwinkels γ an, unter dem der Profilwinkel γ gegenüber der Vertikalen oder Normalen N der Basis 40 geneigt sein muss, damit eine Entformung in Richtung einer von der Vertikalen abweichenden, um den Neigungswinkel Ω gegenüber der Vertikalen geneigten Richtung gewährleistet ist.

Fig. 10A zeigt unter Zugrundelegung desselben Profilwinkels γ für alle Führungsschenkel 41 bezüglich der linken Führungsschiene 4a eine Neigung des Führungsschenkels 41, die deutlich von der Ebene SE der parallelen Seitenwände 81, 82 der Vertiefung 8 abweicht, so dass bei der Entformung keine Probleme entstehen, während bei der rechten Führungsschiene 4b bei einer Neigung des Führungsschenkels 41 um den Profilwinkel γ gegenüber der Normalen N nur eine geringe Abweichung von der Ebene SE der parallelen Seitenwände 81, 82 der Vertiefung 8 festzustellen ist, d.h. die Entformung zwar gewährleistet ist, sich aber in einem Grenzbereich befindet.

Fig. 10B zeigt unter Zugrundelegung desselben Profilwinkels γ für alle Führungsschenkel 41 bezüglich der linken Führungsschiene 4a wegen der Kippung der linken Führungsschiene 4a nach rechts eine Neigung des Führungsschenkels 41, die sich an die Ebene SE der parallelen Seitenwände 81, 82 der Vertiefung 8 angenähert hat, aber noch einen genügenden Abstand besitzt, um eine einwandfreie Entformung zu gewährleisten, während die Neigung des Führungsschenkels 41 der rechten Führungsschiene 4b wegen deren Kippung nach rechts nunmehr eine größere Abweichung von der Ebene SE der parallelen Seitenwände 81, 82 der Vertiefung 8 aufweist.

Vorstehend wurde von demselben Profilwinkel γ für alle Führungsschenkel 41 bzw. Schenkel 41 und 42 und damit von praxisrelevanten Führungsprofilen ausgegangen. Alternativ sind aber auch sowohl bezüglich der eigentlichen Führungsschenkel 41, an denen die Mitnehmer entlang gleiten, als auch bezüglich der Schenkel 41 und 42 insgesamt variable Führungsprofile, d.h. voneinander abweichende Profilwinkel γ möglich.

Die Größer/Gleich-Bedingung bei der Festlegung des bzw. der Profilwinkel γ kann in der Weise genutzt werden, dass den Führungsschienen 4a, 4b unterschiedliche Führungseigenschaften zugewiesen werden. So kann beispielsweise die die Neigung des zur Führung eines Mitnehmers maßgeblichen Führungsschenkels 41 der rechten Führungsschiene 4b bestimmende Profilwinkel γ gleich Null gesetzt werden, d. h. der Führungsschenkel 41 parallel zur Ebene SE der Seitenwände 81, 82 der Vertiefung 8 ausgerichtet werden, um eine optimale Führung der rechten Führungsschiene 4b in Fahrzeuglängsrichtung, d. h. in Richtung der X-Achse des Fahrzeugs zu gewährleisten, während der Führungsschenkel 41 der linken Führungsschiene 4a stärker gegenüber der Normalen zur Basis 40 geneigt wird, um eine sichere Entformung zu gewährleisten.

**Bezugszeichenliste**

| | |
|---|---|
| 1 | Fahrzeugtür |
| 2 | Träger |
| 3 | Antriebseinheit |
| 4a, 4b | Führungsschienen |
| 5 | Mitnehmer |
| 7 | Fensterheberseil |
| 8 | Vertiefung |
| 9 | Fensterscheibe |
| 11 | Türaußenblech |
| 12 | Türinnenblech |
| 13 | Türrahmen |
| 14 | Fensteröffnung |
| 15, 16 | Crashbarrieren |
| 17 | Öffnung |
| 18, 19 | obere Befestigungsstellen |
| 20 | Mittelkörper der Träger |
| 40 | Basis |
| 41,42 | Schenkel |
| 43,44 | Gleitstege |
| 61 - 64 | Seil- oder Umlenkrollen |
| 80 | Basis der Vertiefung |
| 81, 82 | Seitenwände der Vertiefung |
| E | gemeinsame Ebene |
| N | Normale oder Vertikale zur Basis |
| SE | Ebene der parallelen Seitenwände der Vertiefung |
| T | Werkzeugtrennebene |
| $T_N$ | Normale zur Werkzeugtrennebene |
| $\alpha$ | Verdrillungswinkel |
| $\beta$ | Verdrillungswinkel |
| $\gamma$ | Profilwinkel |
| $\delta$ | Neigungswinkel der Führungsschienen-Basen |
| $\Omega$ | Neigungswinkel der Vertiefung |

**Patentansprüche**

1. Führungsschiene (4a, 4b) für einen Fensterheber zum Heben und Senken einer Fensterscheibe (9), wobei die Führungsschiene (4a, 4b) ein verdrilltes oder gebogenes Führungsprofil zur Führung eines mit der Fensterscheibe (9) koppelbaren Verstellteils des Fensterhebers entlang einer durch die Führungsschiene (4a, 4b) vorgegebenen Verstellrichtung aufweist, wobei das Führungsprofil der Führungsschiene (4a, 4b) eine Basis (40) sowie einen Führungsschenkel (41) und einen Schenkel (42) aufweist, **dadurch gekennzeichnet, dass** der Führungsschenkel (41) und der Schenkel (42) unter stumpfen Entformungswinkeln mit ihrem jeweiligen Profilwinkel ($\gamma$) derart gegenüber der Basisnormalen (N) von den Enden der Basis (40) des Führungsprofils abstehen, dass die Größe der Entformungswinkel proportional ist zu der durch die Kinematik des Abzugs der Fensterscheibe (9) vorgegebenen Biegung oder Verdrillung der Führungsschiene (4a, 4b) über den Verstellweg (Hub) der Fensterscheibe (9), wobei der Profilwinkel ($\gamma$) der Bedingung

$$\gamma \geq \alpha + \beta$$

genügt, wobei $\alpha$ und $\beta$ die Verdrillwinkel der Führungsschiene (4a, 4b) bezogen auf die beiden Enden der Führungsschiene (4a, 4b) sind.

2. Türsystem für eine Fahrzeugtür (1) mit einem Träger (2) und mindestens zwei in den Träger (2) integrierten Führungsschienen (4a, 4b), wobei der Träger (2) wenigstens eine mindestens abschnittsweise verdrillte oder gebogene Führungsschiene (4a, 4b) nach Anspruch 1 enthält.

3. Türsystem nach Anspruch 2, **dadurch gekennzeichnet, dass** bei parallel zueinander ausgerichteten, auf dem Träger (2) angeordneten Führungsschienen (4a, 4b) der Führungsschenkel (41) und der Schenkel (42) mit einem Profilwinkel ($\gamma$) gegenüber der Basisnormalen (N) von den Enden der Basis (40) des Führungsprofils abstehen, der der Bedingung

$$\gamma \geq \alpha + \beta$$

genügt, wobei $\alpha$ und $\beta$ die Verdrillwinkel der Führungsschiene (4a, 4b) bezogen auf die beiden Enden der Führungsschiene (4a, 4b) sind.

4. Türsystem nach Anspruch 2 oder 3, **dadurch gekennzeichnet, dass** bei auf die Fensterscheibenfläche ausgerichteten, auf dem Träger (2) angeordneten Führungsschienen (4a, 4b) der Führungsschenkel (41) und der Schenkel (42) mit einem Profilwinkel ($\gamma$) gegenüber der Basisnormalen (N) von den Enden der Basis (40) abstehen, der der Bedingung

$$\gamma \geq \alpha + \beta - \delta/2$$

genügt, wobei $\alpha$ und $\beta$ die Verdrillwinkel der Führungsschienen (4a, 4b) bezogen auf die beiden Enden der Führungsschienen (4a, 4b) sind und $\delta$ der Winkel zwischen den Basen (40) der beiden Führungsschienen (4a, 4b) ist.

**5.** Türsystem nach Anspruch 3 mit einer in den Träger (2) eingeformten Vertiefung (8) zur Aufnahme eines Bauteils des Fensterhebers, insbesondere zur Aufnahme einer Seiltrommel, wobei die Seitenwände (81, 82) der Vertiefung (8) mit einem Neigungswinkel ($\Omega$) zur Normalen ($T_N$) der Werkzeugtrennebene (T) eines Werkzeugs geneigt sind, **dadurch gekennzeichnet, dass** der Führungsschenkel (41) und der Schenkel (42) der Führungsschienen (4a, 4b) mit einem Profilwinkel ($\gamma$) gegenüber der Basisnormalen (N) geneigt sind, der der Bedingung

$$\gamma \geq \alpha + \beta \pm \Omega$$

genügt, wobei $\alpha$ und $\beta$ die Verdrillwinkel der Führungsschienen (4a, 4b) bezogen auf die beiden Enden der Führungsschienen (4a, 4b) sind.

**6.** Türsystem nach Anspruch 4 mit einer in den Träger (2) eingeformten Vertiefung (8) zur Aufnahme eines Bauteils des Fensterhebers, insbesondere zur Aufnahme einer Seiltrommel, wobei die Seitenwände (81, 82) der Vertiefung (8) mit einem Neigungswinkel ($\Omega$) zur Normalen ($T_N$) der Werkzeugtrennebene (T) eines Werkzeugs geneigt sind, **dadurch gekennzeichnet, dass** der Führungsschenkel (41) und der Schenkel (42) der Führungsschienen (4a, 4b) mit einem Profilwinkel ($\gamma$) gegenüber der Basisnormalen (N) geneigt sind, der der Bedingung

$$\gamma \geq \alpha + \beta - \delta/2 \pm \Omega$$

genügt, wobei $\alpha$ und $\beta$ die Verdrillwinkel der Führungsschienen (4a, 4b) bezogen auf die beiden Enden der Führungsschienen (4a, 4b) sind und $\delta$ der Winkel zwischen den Basen der beiden Führungsschienen (4a, 4b) ist.

**7.** Türsystem nach einem der Ansprüche 2-6, **dadurch gekennzeichnet, dass** bei einem Doppelschienensystem die Profilwinkel ($\gamma$) der Führungsschenkel (41) der rechten und linken Führungsschiene (4a, 4b) voneinander verschieden sind.

**8.** Türsystem nach einem der Ansprüche 2-7, **dadurch gekennzeichnet, dass** die Profilwinkel ($\gamma$) der Führungsschenkel (41) und/oder der Schenkel (42) der rechten und linken Führungsschiene (4a, 4b) voneinander verschieden sind.

**9.** Türsystem nach Anspruch 7, **dadurch gekennzeichnet, dass** der Profilwinkel ($\gamma$) des Führungsschenkels (41) mindestens einer Führungsschiene (4a bzw. 4b) minimal, insbesondere gleich Null ist

**10.** Verfahren zur Herstellung einer Führungsschiene nach Anspruch 1, **dadurch gekennzeichnet, dass** eine dem Führungsprofil der Führungsschiene (4a, 4b) entsprechende, geteilte Form eines Spritzgießwerkzeugs zum Einspritzen von Kunststoff unter Druck geschlossen und zum Entformen der Führungsschiene (4a, 4b) geöffnet wird, ohne dass ein Schieber senkrecht oder unter einen Winkel zur Öffnung und Schließrichtung des Spritzgießwerkzeugs (AUF-ZU-Werkzeug) geführt wird.

**11.** Verfahren zur Herstellung eines Trägers (2) und zwei an dem Träger (2) angeordneten Führungsschienen (4a, 4b) eines Fensterhebers nach Anspruch 2, **dadurch gekennzeichnet, dass** eine dem Träger (2) und dem Führungsprofil der Führungsschienen (4a, 4b) entsprechende geteilte Form eines Spritzgießwerkzeugs zum Einspritzen von Kunststoff unter Druck geschlossen und zum Entformen des Trägers (2) und der Führungsschienen (4a, 4b) geöffnet wird, ohne dass ein Schieber senkrecht oder unter einem Winkel zur Öffnungs-Schließrichtung des Spritzgießwerkzeugs (AUF-ZU-Werkzeug) geführt wird.

**Claims**

**1.** Guide rail (4a, 4b) for a window lifter for raising and lowering a window pane (9), wherein the guide rail (4a, 4b) comprises a guide profile that can be twisted or bent for guiding an adjusting part of the window lifter coupled to the window pane along an adjusting direction predetermined by the guide rail (4a, 4b), wherein the guide profile of the guide rail (4a, 4b) comprises a base (40) as well as a guide leg (41) and a leg (42),
**characterized in that,**
the guide leg (41) and the leg (42) protrude with their respective profile angle ($\gamma$) in respect to the base normal (N) from the ends of the base (40) of the guide profile such that the size of the draft angles is proportional to the bending or twisting of the guide rails (4a, 4b) predetermined by the kinematics of the retraction of the window pane (9) over the adjusting travel (12) of the window pane (9), wherein the profile angle ($\gamma$) meets the requirement

$$\gamma \geq \alpha + \beta,$$

wherein $\alpha$ and $\beta$ are the twisting angles of the guide rail (4a, 4b) in respect to both ends of the guide rail (4a, 4b).

**2.** Door system for a vehicle door (1) with a carrier (2) and at least two guide rails (4a, 4b) integrated into the carrier (2), wherein the carrier (2) contains at least one guide rail (4a, 4b) according to claim 1 that is at least in sections twisted or bent.

3. Door system according to claim 2, **characterized in that** in case of guide rails (4a, 4b) aligned parallel to each other and arranged on the carrier (2) the guide leg (41) and the leg (42) protrude from the ends of the base (40) of the guide profile at a profile angle ($\gamma$) in respect to the base normal (N), wherein said profile angle meets the requirement

$$\gamma \geq \alpha + \beta$$

wherein $\alpha$ and $\beta$ are the twisting angles of the guide rail (4a, 4b) in respect to both ends of the guide rail (4a, 4b).

4. Door system according to claim 2 or 3, **characterized in that** in case of guide rails (4a, 4b) aligned to the window pane area and arranged on the carrier (2) the guide leg (41) and the leg (42) protrude from the ends of the base (40) with a profile angle ($\gamma$) in respect to the base normal (N), wherein said profile angle meets the requirement

$$\gamma \geq \alpha + \beta - \delta / 2$$

wherein $\alpha$ and $\beta$ are the twisting angles of the guide rail (4a, 4b) in respect to both ends of the guide rails (4a, 4b) and $\delta$ is the angle between the bases (40) of both guide rails (4a, 4b).

5. Door system according to claim 3 with a recess (8) for receiving a component of the window lifter, in particular for receiving a rope drum, moulded into the carrier (2), wherein the side walls (81, 82) of the recess (8) are inclined with an inclination angle ($\Omega$) to the normal ($T_N$) of the tool parting plane (T) of a tool, **characterized in that** the guide leg (41) and the leg (42) of the guide rails (4a, 4b) are inclined with a profile angle ($\gamma$) in respect to the base normal (N), wherein said profile angle meets the requirement

$$\gamma \geq \alpha + \beta \pm \Omega,$$

wherein $\alpha$ and $\beta$ are the twisting angles of the guide rails (4a, 4b) in respect to both ends of the guide rails (4a, 4b).

6. Door system according to claim 4 with a recess (8) for receiving a component of the window lifter, in particular for receiving a rope drum, moulded into the carrier (2), wherein the side walls (81, 82) of the recess (8) are inclined at an inclination angle ($\Omega$) to the normal ($T_N$) of the tool parting plane (T) of a tool, **characterized in that** the guide leg (41) and the leg (42) of the guide rails (4a, 4b) are inclined with a profile angle ($\gamma$) in respect to the base normal (N), wherein the profile angle meets the requirement

$$\gamma \geq \alpha + \beta - \delta / 2 \pm \Omega,$$

wherein $\alpha$ and $\beta$ are the twisting angles of the guide rails (4a, 4b) in respect to both ends of the guide rails (4a, 4b) and $\delta$ is the angle between the bases of both guide rails (4a, 4b).

7. Door system according to one of the claims 2 to 6, **characterized in that** in case of a double rail system the profile angles ($\gamma$) of the guide legs (41) of the right and left guide rail (4a, 4b) differ from each other.

8. Door system according to one of the claims 2 to 7, **characterized in that** the profile angles ($\gamma$) of the guide leg (41) and/or the legs (42) of the right and left guide rail (4a, 4b) differ from each other.

9. Door system according to claim 7, **characterized in that** the profile angle ($\gamma$) of the guide leg (41) of at least one guide rail (4a or 4b) is minimal, in particular zero.

10. Method for producing a guide rail according to claim 1, **characterized in that** a separated form of a injection moulding tool, wherein said form corresponds to the guide profile of the guide rail (4a, 4b), is closed under pressure for injecting plastic and is opened for demoulding of the guide rail (4a, 4b) without that a slider is guided vertical or in an angle for opening or to the closing direction of the injection moulding tool (on-off-tool).

11. Method for producing a carrier (2) and two guide rails (4a, 4b) of a window lifter arranged on the carrier (2) according to claim 2, **characterized in that,** a separated form of an injection moulding tool, wherein said form corresponds to the carrier (2) and the guide profile of the guide rails (4a, 4b), is closed under pressure for injecting plastics and is opened for demoulding of the carrier (2) and the guide rails (4a, 4b) without that a slider is guided vertical or at an angle to the opening-closing direction of the injection moulding tool (on-off-tool).

**Revendications**

1. Rail de guidage (4a, 4b) pour un lève-vitre pour lever et abaisser une vitre (9), dans lequel le rail de guidage (4a, 4b) présente un profil de guidage torsadé ou plié pour le guidage d'une partie de réglage pouvant être couplée à la vitre (9) du lève-vitre le long d'un sens de réglage prédéfini par le rail de guidage (4a, 4b), dans lequel le profil de guidage du rail de guidage (4a, 4b) présente une base (40) ainsi qu'une branche de guidage (41) et une branche (42), **caractérisé en ce que** la branche de guidage (41) et la branche (42) dépassent, selon des angles de démoulage obtus avec leur angle de profil (y) respectif par rapport à la normale de base (N), des extrémités de la base (40) du profil de guidage de telle manière que la grandeur des angles de démoulage est proportionnelle au pliage ou à la torsion du rail de guidage (4a, 4b), prédéfinie par la cinématique du retrait de la vitre (9), sur la course de réglage (Hub) de la vitre (9), dans lequel l'angle de profil (y) satisfait à la condition

$$y \geq \alpha + \beta$$

dans laquelle $\alpha$ et $\beta$ sont les angles de torsion du rail de guidage (4a, 4b) par rapport aux deux extrémités du rail de guidage (4a, 4b).

2. Système de portière pour une portière de véhicule (1) avec un support (2) et au moins deux rails de guidage (4a, 4b) intégrés dans le support (2), dans lequel le support (2) contient au moins un rail de guidage (4a, 4b) plié ou torsadé au moins par sections selon la revendication 1.

3. Système de portière selon la revendication 2, **caractérisé en ce que** pour des rails de guidage (4a, 4b) agencés sur le support (2), orientés parallèlement l'un à l'autre, la branche de guidage (41) et la branche (42) dépassent, avec un angle de profil (y) par rapport à la normale de base (N), des extrémités de la base (40) du profil de guidage, qui satisfait à la condition

$$y \geq \alpha + \beta$$

dans laquelle $\alpha$ et $\beta$ sont les angles de torsion du rail de guidage (4a, 4b) par rapport aux deux extrémités du rail de guidage (4a, 4b).

4. Système de portière selon la revendication 2 ou 3, **caractérisé en ce que** pour des rails de guidage (4a, 4b) agencés sur le support (2), orientés sur la surface de vitre, la branche de guidage (41) et la branche (42) dépassent, avec un angle de profil (y) par rapport à la normale de base (N), des extrémités de la base (40) qui satisfait à la condition

$$y \geq \alpha + \beta - \delta/2$$

dans laquelle $\alpha$ et $\beta$ sont les angles de torsion des rails de guidage (4a, 4b) par rapport aux deux extrémités des rails de guidage (4a, 4b) et $\delta$ est l'angle entre les bases (40) des deux rails de guidage (4a, 4b).

5. Système de portière selon la revendication 3 avec une cavité (8) formée dans le support (2) pour la réception d'un composant du lève-vitre, en particulier pour la réception d'un tambour de câble ; dans lequel les parois latérales (81, 82) de la cavité (8) sont inclinées avec un angle d'inclinaison ($\Omega$) à la normale ($T_N$) du plan de séparation d'outil (T) d'un outil, **caractérisé en ce que** la branche de guidage (41) et la branche (42) des rails de guidage (4a, 4b) sont inclinées avec un angle de profil (y) par rapport à la normale de base (N), qui satisfait à la condition

$$y \geq \alpha + \beta \pm \Omega$$

dans laquelle $\alpha$ et $\beta$ sont les angles de torsion des rails de guidage (4a, 4b) par rapport aux deux extrémités des rails de guidage (4a, 4b).

6. Système de portière selon la revendication 4 avec une cavité (8) formée dans le support (2) pour la réception d'un composant du lève-vitre, en particulier pour la réception d'un tambour de câble, dans lequel les parois latérales (81, 82) de la cavité (8) sont inclinées avec un angle d'inclinaison ($\Omega$) à la normale ($T_N$) du plan de séparation d'outil (T) d'un outil, **caractérisé en ce que** la branche de guidage (41) et la branche (42) des rails de guidage (4a, 4b) sont inclinées avec un angle de profil ($\gamma$) par rapport à la normale de base (N) qui satisfait à la condition

$$y \geq \alpha + \beta - \delta/2 \pm \Omega$$

dans laquelle $\alpha$ et $\beta$ sont les angles de torsion des rails de guidage (4a, 4b) par rapport aux deux extrémités des rails de guidage (4a, 4b) et $\delta$ est l'angle entre les bases des deux rails de guidage (4a, 4b).

7. Système de portière selon l'une quelconque des revendications 2 à 6, **caractérisé en ce que** pour un système de rails doubles, les angles de profil (y) des branches de guidage (41) des rails de guidage droit et gauche (4a, 4b) sont différents l'un de l'autre.

8. Système de portière selon l'une quelconque des revendications 2 à 7, **caractérisé en ce que** les angles de profil (y) des branches de guidage (41) et/ou des branches (42) des rails de guidage droit et gauche (4a, 4b) sont différents l'un de l'autre.

9. Système de portière selon la revendication 7, **caractérisé en ce que** l'angle de profil (y) de la branche de guidage (41) d'au moins un rail de guidage (4a ou 4b) est minimal, en particulier égal à zéro.

10. Procédé de fabrication d'un rail de guidage selon la revendication 1, **caractérisé en ce qu'**une forme divisée correspondant au profil de guidage du rail de guidage (4a, 4b) d'un outil de moulage par injection est fermée pour l'injection de matière plastique sous pression et est ouverte pour le démoulage du rail de guidage (4a, 4b) sans qu'un coulisseau ne soit guidé perpendiculairement ou selon un angle par rapport au sens d'ouverture et de fermeture de l'outil de moulage par injection (outil OUVERT-FERME).

11. Procédé de fabrication d'un support (2) et de deux rails de guidage (4a, 4b) agencés au niveau du support (2) d'un lève-vitre selon la revendication 2, **caractérisé en ce qu'**une forme divisée correspondant au support (2) et au profil de guidage du rail de guidage (4a, 4b) d'un outil de moulage par injection est fermée pour l'injection de plastique sous pression et est ouverte pour le démoulage du support (2) et des rails de guidage (4a, 4b) sans qu'un coulisseau ne soit guidé perpendiculairement ou selon un angle par rapport au sens d'ouverture et de fermeture de l'outil de moulage par injection (outil OUVERT-FERME).

# FIG 1

# FIG 2

# FIG 3

FIG 4A
(A-A)

FIG 4B
(B-B)

FIG 4C
(C-C)

EP 2 591 193 B1

# FIG 5

N

γ

90°

43

44

41

40

42

$$\gamma \geq \alpha + \beta$$

FIG 6

FIG 7A
(A-A)

FIG 7B
(B-B)

FIG 7C
(C-C)

# FIG 8

$$\gamma \geq \alpha + \beta - \delta/2$$

# FIG 9

(B - B)

EP 2 591 193 B1

## FIG 10A

(A-A)

$\gamma$ N SE

43
41
40
4a

$\gamma$ N SE

4b
42
43
41

T

## FIG 10B

(C-C)

$\gamma$ N SE

43
41
40
42
4a

TN

SE

$\gamma$

N

$\Omega$

4b
42
43
41
40
T

$\gamma \geq \alpha + \beta - (\partial/2) - \Omega$

$\gamma \geq \alpha + \beta - (\partial/2) + \Omega$

EP 2 591 193 B1

**IN DER BESCHREIBUNG AUFGEFÜHRTE DOKUMENTE**

**In der Beschreibung aufgeführte Patentdokumente**

- DE 19942643 A1